(19) Europäisches Patentamt
European Patent Office
Office européen des brevets

(11) EP 2 376 989 B1

(12) FASCICULE DE BREVET EUROPEEN

(45) Date de publication et mention
de la délivrance du brevet:
16.10.2019 Bulletin 2019/42

(51) Int Cl.:
*G05B 23/02* (2006.01)

(21) Numéro de dépôt: 09803853.2

(86) Numéro de dépôt international:
PCT/FR2009/052511

(22) Date de dépôt: 14.12.2009

(87) Numéro de publication internationale:
WO 2010/076469 (08.07.2010 Gazette 2010/27)

(54) **IDENTIFICATION DE DEFAILLANCES DANS UN MOTEUR D'AERONEF**

IDENTIFIKATION VON DEFEKTEN IN EINEM FLUGZEUGTRIEBWERK

IDENTIFICATION OF DEFECTS IN AN AIRCRAFT ENGINE

(84) Etats contractants désignés:
AT BE BG CH CY CZ DE DK EE ES FI FR GB GR
HR HU IE IS IT LI LT LU LV MC MK MT NL NO PL
PT RO SE SI SK SM TR

(30) Priorité: 15.12.2008 FR 0858609

(43) Date de publication de la demande:
19.10.2011 Bulletin 2011/42

(73) Titulaire: Safran Aircraft Engines
75015 Paris (FR)

(72) Inventeur: LACAILLE, Jérôme
93110 Rosny Sous Bois (FR)

(74) Mandataire: Boura, Olivier et al
Cabinet Beau de Loménie
Tour Méditerrannée
65 avenue Jules Cantini
13006 Marseille (FR)

(56) Documents cités:
WO-A2-2007/131545    DE-A1-102007 010 978

• DETROJA K P ET AL: "A possibilistic clustering
approach to novel fault detection and isolation"
JOURNAL OF PROCESS CONTROL, OXFORD,
GB, vol. 16, no. 10, 1 décembre 2006 (2006-12-01),
pages 1055-1073, XP024963587 ISSN: 0959-1524
[extrait le 2006-12-01]
• JOE QIN S: "Statistical process monitoring:
basics and beyond" JOURNAL OF
CHEMOMETRICS, WILEY, NEW YORK, NY, US,
vol. 17, 1 janvier 2003 (2003-01-01), pages
480-502, XP007909246 ISSN: 1099-128X

**Description**

Domaine de l'invention

La présente invention se rapporte au domaine de surveillance d'un moteur d'aéronef. En particulier, l'invention concerne une identification de défaillances et détection de composants fautifs dans un moteur d'aéronef.

Dans de nombreuses industries, telles que l'aéronautique ou le spatial, il est important de pouvoir identifier les défaillances d'un moteur d'aéronef à partir des mesures décrivant l'état instantané du moteur pour éventuellement déduire le composant physique en faute. Cependant, ces mesures temporelles sont exprimées en unités physiques différentes et peuvent varier de vol en vol de façon quelconque ce qui complique l'analyse et le traitement de ces mesures.

Il existe des outils de « scoring » qui cherchent à substituer à des mesures temporelles pouvant être exprimées en unités différentes, des scores de qualités. Ces outils sont basés sur des calculs de vraisemblances conduisant à des systèmes de maîtrise de qualité. Cependant, les outils de « scoring » sont difficiles à appliquer dans un domaine multi-varié tel que la surveillance d'un moteur d'aéronef. De plus, ces scores correspondent à des valeurs relatives qui ne peuvent pas être facilement transformées dans un environnement réel compréhensible par les experts moteur.

Par ailleurs, il existe des outils de classification ou de labellisation qui en général accompagnent des solutions de maîtrise statistique de procédés industriels. Toutefois, ces outils de classification doivent être calibrés sur des bases de données de fautes de tailles conséquentes très difficiles à obtenir, très coûteuses, et qui réclament un important temps de calcul. Particulièrement, ces outils de classification sont extrêmement difficiles à appliquer dans le domaine des moteurs d'aéronefs. En effet, heureusement il y a très peu de vraies pannes dans un moteur d'aéronef et donc il est très difficile de construire une grande base de données de défaillances.

Le document de K.P. Detroja et al. Intitulé « A possibilistic clustering approach to novel fault detection and isolation », Journal of Process Control 16, 2006 décrit un procédé de détection et d'isolation de défaillances dans un environnement industriel basé sur une technique de classification possibiliste

Objet et résumé de l'invention

La présente invention concerne un procédé d'identification de défaillances dans un moteur d'aéronef selon la revendication 1

Ce procédé permet une interprétation facile des vecteurs d'anomalies et de références qui correspondent à des signatures représentées dans un référentiel physique compréhensible par des experts du moteur. De plus, il est possible de s'appuyer sur un recueil de connaissances auprès des experts, et non pas sur une très couteuse et difficile à construire base de données de défaillances ou de fautes. Ceci permet d'identifier les défaillances de manière compréhensible et rapide à moindre coût.

En outre, l'invention permet de facilement sélectionner les signatures des défaillances les plus proches même dans un espace de grande dimension en limitant la dimension du problème à un sous-espace engendré par les vecteurs de références sélectionnés.

Par ailleurs, les vecteurs de références peuvent être facilement construits tout en gardant une signification compréhensible pour les experts.

Selon une particularité de la présente invention, ladite sphère est de rayon 1.

Selon un autre aspect de la présente invention, l'identification des défaillances comporte les étapes suivantes :

- définir pour chaque vecteur de référence, une probabilité d'occurrence a priori suivant des critères établis par expertise, et
- calculer pour chaque vecteur de référence, une probabilité d'occurrence a posteriori en fonction de ladite probabilité d'occurrence a priori et desdites distances géodésiques.

Ceci permet de facilement identifier les défaillances les plus probables.

Selon une particularité de la présente invention, ledit ensemble d'indicateurs standardisés $\tilde{\tilde{y}}_1, \cdots \tilde{\tilde{y}}_n$ comporte des indicateurs $\tilde{y}_1, \cdots \tilde{y}_m$ identifiés suivant des critères établis par expertise.

Ainsi, l'expert moteur reste à tout moment capable d'interagir et d'interpréter les signatures d'anomalies.

Selon une autre particularité de la présente invention, ledit ensemble d'indicateurs standardisés $\tilde{\tilde{y}}_1, \cdots \tilde{\tilde{y}}_n$ comporte en outre des indicateurs dynamiques construits en fonction des indicateurs à des instants présents et passés $\tilde{\tilde{y}}(t) = f\left(\tilde{y}(s); s \leq t\right)$ représentatifs des comportements temporels dudit moteur d'aéronef.

Ainsi, il est possible de capter le comportement dynamique et le mode d'évolution du moteur d'aéronef.

Avantageusement, la construction dudit vecteur d'anomalie comporte les étapes suivantes:

- former un vecteur indicateur $\tilde{\tilde{y}}$ à partir dudit ensemble d'indicateurs,
- construire ledit vecteur d'anomalie $z$ en renormalisant ledit vecteur indicateur $\tilde{\tilde{y}}$ selon la formule suivante :

$$z = \Sigma^{-\frac{1}{2}}\left(\widetilde{\widetilde{y}} - \mu\right),$$

où $\mu$ est la moyenne des vecteurs indicateurs et $\Sigma$ est une matrice de covariance dont on calcule une pseudo-inverse $\Sigma^{-1}$ et une racine $\Sigma^{-\frac{1}{2}}$ par décomposition en valeurs singulières.

Ceci permet de faciliter l'interprétation et les calculs en relation avec les vecteurs d'anomalies.

En outre, le procédé comporte les étapes suivantes :

- calculer une norme dudit vecteur d'anomalie selon une distance de Mahalanobis :

$$d^2 = \|z\|^2 = \left(\widetilde{\widetilde{y}} - \mu\right)^T \Sigma^{-1}\left(\widetilde{\widetilde{y}} - \mu\right),$$

- détecter une anormalité dudit moteur d'aéronef suivant un seuil de déclenchement défini en fonction de la distribution statistique de ladite norme du vecteur d'anomalie.

Ainsi, la norme du vecteur d'anomalie correspond à un score global représentatif d'un comportement anormal facile à détecter dans une distribution statistique connue qui peut être approximée par un $\chi^2$.

Le procédé selon l'invention comporte en outre les étapes suivantes :

- établir une grille de décision suivant des critères établis par expertise,
- déduire selon des règles bayésiennes des probabilités de défaillances par composant à partir desdites probabilités d'occurrences a posteriori et de ladite grille de décision, et
- détecter des composants physiques fautifs qui sont responsables desdites défaillances selon lesdites probabilités de défaillances par composant.

Ceci permet de facilement remonter à l'équipement fautif permettant une maintenance rapide et efficace du moteur d'aéronef.

Ladite grille de décision peut être formée d'une matrice de probabilités conditionnelles qu'un composant soit fautif sachant qu'une défaillance est observée et d'une série de coefficients correspondants à des probabilités a priori des défaillances de chaque composant.

Ainsi, la grille de décision peut être facilement construite à partir des connaissances des experts.

Avantageusement, ladite grille de décision est corroborée par un apprentissage automatique.

Ceci permet de construire une grille de décision plus précise et plus robuste.

L'invention vise également un système d'identification de défaillances dans un moteur d'aéronef selon la revendication 11.

L'invention vise aussi un programme d'ordinateur selon la revendication 14.

Brève description des dessins

D'autres particularités et avantages du dispositif et du procédé selon l'invention ressortiront mieux à la lecture de la description faite ci-après, à titre indicatif mais non limitatif, en référence aux dessins annexés sur lesquels :

- la figure 1 illustre des moyens matériels mis en oeuvre dans le système ou procédé d'identification de défaillances dans un moteur d'aéronef selon l'invention ;
- la figure 2 est un organigramme illustrant les étapes principales d'identification de défaillances du moteur d'aéronef de la figure 1 ; et
- la figure 3 est un organigramme illustrant les étapes principales de détection des composants fautifs dans le moteur d'aéronef de la figure 1.

Description détaillée de modes de réalisation

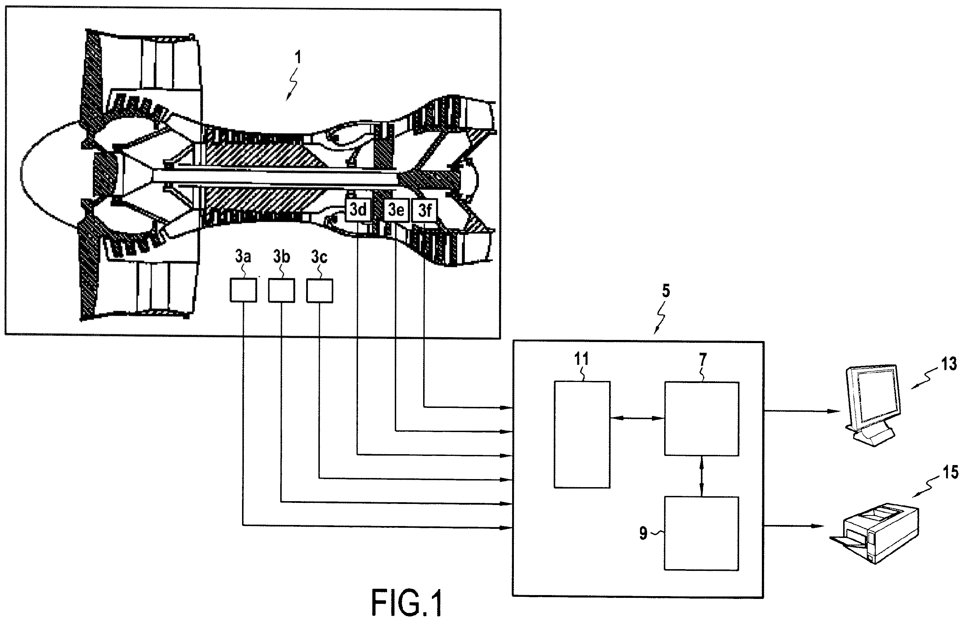

La figure 1 illustre des moyens matériels mis en oeuvre dans le système ou procédé d'identification de défaillances dans un moteur d'aéronef 1 selon l'invention.

Ce système comprend plusieurs capteurs 3a-3f pour mesurer des données temporelles concernant le moteur 1 et son environnement. Le système comprend aussi des moyens de traitement 5 de l'information tel un calculateur ou ordinateur pouvant être utilisé pour l'exécution d'un programme informatique conçu pour mettre en oeuvre le procédé selon l'invention. Les moyens de traitement 5 comprennent les moyens matériels que l'on trouve habituellement dans un ordinateur. Plus particulièrement, ces moyens de traitement 5 comprennent une unité centrale 7 qui exécute les séquences d'instructions du programme selon le procédé de l'invention, une mémoire centrale 9 qui stocke les données et programmes en cours d'exécution, des supports ou moyens de stockage 11 de données numériques conservant les données, des périphériques d'entrées (capteurs 3a-3f, clavier, souris, ...) ainsi que des périphériques de sorties (écran 13, imprimante 15,...) pour percevoir le résultat de l'identification des défaillances.

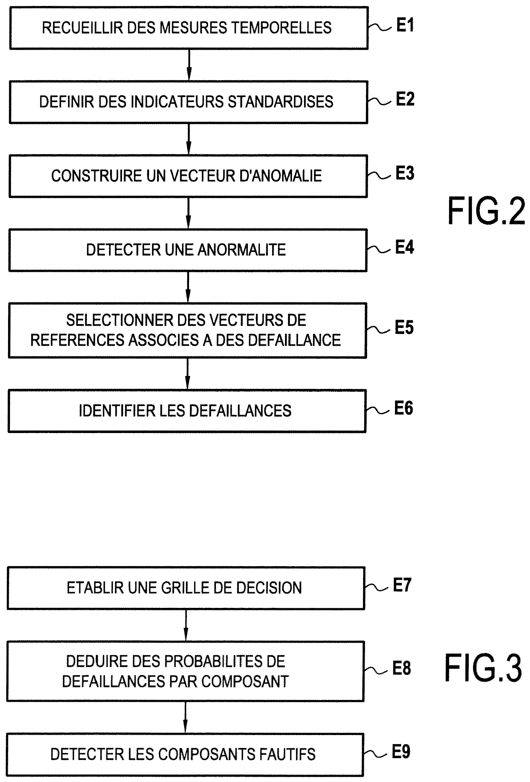

Conformément à l'invention, la figure 2 illustre les étapes principales implémentées par les moyens de traitement 5 pour identifier les défaillances dans le moteur 1 d'aéronef.

A l'étape E1, les moyens de traitement 5 sont configurés pour recueillir et numériser au cours du temps des mesures temporelles acquises par les capteurs 3a-3f sur le moteur 1 d'aéronef et son environnement.

A l'étape E2, les moyens de traitement 5 sont configurés pour définir des indicateurs standardisés.

En effet, on peut calculer à partir des mesures temporelles des indicateurs $y_1,...,y_j,...,y_m$ spécifiques à des éléments du moteur 1. A titre d'exemple, un indicateur peut correspondre au délai nécessaire pour qu'un arbre du moteur atteigne l'accélération maximale après chaque démarrage du moteur, un autre indicateur peut être le gradient des températures des gaz d'échappement du moteur, etc.

On notera que les indicateurs peuvent être spécifiques à des éléments physiques indiquant un élément particulier du moteur 1 ou à des éléments logiques indiquant une tâche spécifique de tout un ensemble d'éléments du moteur 1.

Ces indicateurs $y_1,...,y_j,...y_m$ peuvent être calculés suivant des critères d'expertise à partir par exemple, d'un document établi par les experts moteur appelé AMDEC (Analyse des modes de défaillance, de leurs effets et de leur criticité). Ce document liste les défaillances, les équipements concernés, les causes, les conséquences, mais aussi les indicateurs calculés à partir des mesures précédentes permettant de relever le phénomène avec pour chacun une description des effets observés.

Ensuite, ces indicateurs $y_1,...,y_j,...,y_m$ peuvent être standardisés par exemple, par une technique classique de normalisation en fonction d'une moyenne et d'un écart-type calculés a priori sur une série de données précédemment numérisées.

En variante, on peut définir des indicateurs standardisés $\tilde{y}_1,...,\tilde{y}_j,...,\tilde{y}_m$ indépendants vis-à-vis du contexte extérieur et qui prennent aussi en compte les relations d'interdépendances stochastiques entre les indicateurs eux-mêmes.

En effet, chaque mesure recueillie lors d'un vol est réalisée dans des conditions externes ou internes particulières. Ces conditions qui peuvent avoir un impact sur la lecture des indicateurs peuvent être mesurées et enregistrées en tant que données exogènes. Les conditions externes peuvent comprendre les températures et pressions extérieures, l'attitude et la vitesse relative de l'avion, le lieu de vol (au dessus de la mer, le désert, la terre, etc.), les conditions météo (pluie, neige, gel, etc.), l'hygrométrie, etc. Les conditions internes peuvent concerner l'utilisation spécifique du moteur (vitesse de l'arbre, température des gaz d'échappement, type du carburant, etc.). A titre d'exemple de données exogènes, la température d'huile juste avant le démarrage du moteur peut être considérée comme une donnée de contexte qui différencie deux types de démarrages (démarrage à froid ou démarrage à chaud).

Ainsi, on peut identifier à partir des mesures temporelles réalisées par les capteurs 3a-3f, un ensemble de données exogènes $X = (x_1,...,x_h)$ représentatives du contexte extérieur intervenant sur les indicateurs $y_1,...,y_j,...y_m$. Ceci peut être réalisé suivant des critères d'expertise par une analyse de dépendance qui permet de lister les données contextuelles liées aux indicateurs.

Ensuite, pour chaque indicateur, on construit une régression des observations sur un espace engendré par les autres indicateurs, les données de contexte, des expressions issues de l'analyse des experts et d'autres fonctions implémentées par exemple, sous la forme d'un modèle à noyaux. L'espace construit, sur lequel on projette les observations est de bien plus grande dimension que le nombre d'indicateurs initiaux.

Autrement dit, on construit pour chaque indicateur donné $y_j$, un espace de projection $E^{(j)} = \sigma(Y^{(j)}, X)$. Cet espace de projection est engendré par l'ensemble de données exogènes $X = (x_1,...,x_h)$ et par des transformations analytiques d'un sous-ensemble d'indicateurs $Y^{(j)} = (y_1,..., y_{j-1}, y_{j+1},...y_m)$ comprenant tous les indicateurs initiaux sauf l'indicateur donné $y_j$. Les transformations analytiques expriment des relations physiques entre les indicateurs et peuvent être définies par les experts. Ces transformations analytiques peuvent comporter en plus d'une transformation identité, des transformations ou fonctions linéaires ou non linéaires apportant des informations sur des corrélations entre les différents indicateurs. Après, on calcule pour chaque indicateur donné $y_j$, un estimateur correspondant $\hat{y}_j$ en projetant selon une technique de régression l'indicateur donné $y_j$ sur l'espace de projection $E^{(j)} = \sigma(Y^{(j)}, X)$ formant de cette manière un ensemble d'estimateurs $\hat{Y} = (\hat{y}_1,...,\hat{y}_j,..., \hat{y}_m)$.

Finalement, on peut normaliser chaque estimateur $\hat{y}_j$ en fonction d'une valeur de référence de l'indicateur correspondant $y_j$ et d'un résidu ou écart entre chaque estimateur donné $\hat{y}_j$ et l'indicateur correspondant $y_j$ pour former les indicateurs standardisés $\tilde{y}_1,...,\tilde{y}_j,...,\tilde{y}_m$ représentatif du fonctionnement du moteur 1.

A partir de ces indicateurs standardisés $\tilde{y}_1,...,\tilde{y}_j,...,\tilde{y}_m$ construits selon les méthodes ci-dessus ou par une toute autre méthode, il s'agit maintenant de diagnostiquer une anomalie puis de déduire une défaillance spécifique et éventuellement le composant physique concerné.

Cependant, avant de diagnostiquer des anomalies, il est possible en plus des indicateurs $\tilde{y}_1,...\tilde{y}_m$ identifiés par expertise d'ajouter des indicateurs du passé immédiat (tendance, courbure, accélération, forme...) pour capter aussi le comportement dynamique du moteur et donc son mode d'évolution.

En effet, l'observation successive des indicateurs peut engendrer une information dynamique sur les indicateurs. Etant donné que les indicateurs standardisés peuvent être comparés (ce qui n'est pas le cas pour les indicateurs initiaux), il est possible de combiner de manière dynamique les indicateurs standardisés identifiés par expertise.

Ainsi, on peut définir un ensemble d'indicateurs standardisés $\tilde{\tilde{y}}_1,...\tilde{\tilde{y}}_n$ représentatifs des comportements temporels du moteur 1 d'aéronef et comportant des indicateurs $\tilde{y}_1,...\tilde{y}_m$ identifiés par expertise et des indicateurs dynamiques construits en fonction des indi-

cateurs $\tilde{y}_1, \cdots \tilde{y}_m$ identifiés par expertise à des instants présents et passés $\tilde{\tilde{y}}(t) = f(\tilde{y}(s); s \leq t)$.

L'étape E3 concerne la construction d'une signature d'anomalie représentative du comportement du moteur 1. Plus particulièrement, les moyens de traitement 5 sont configurés pour construire un vecteur d'anomalie (ou une signature d'anomalie) en fonction de l'ensemble d'indicateurs standardisés $\tilde{\tilde{y}}_1, \cdots \tilde{\tilde{y}}_n$.

La construction du vecteur d'anomalie peut être réalisé en formant d'abord un vecteur indicateur $\tilde{\tilde{y}}$ de dimension n à partir de l'ensemble d'indicateurs standardisés $\tilde{\tilde{y}}_1, \cdots \tilde{\tilde{y}}_n$. Ensuite, on peut construire le vecteur d'anomalie standardisé $z$ en renormalisant le vecteur indicateur $\tilde{\tilde{y}}$.

On notera que pour des indicateurs standardisés calculés par des résidus obtenus selon une technique de minimisation des moindres carrés, le vecteur indicateur $\tilde{\tilde{y}}$ peut être raisonnablement normalisé selon une distribution gaussienne multi-variée.

Plus particulièrement, on retranche la moyenne $\mu$ des vecteurs indicateurs standardisés $\tilde{\tilde{y}}_1, \cdots \tilde{\tilde{y}}_n$ pour que le vecteur soit centré, on calcule la matrice de covariance $\Sigma$, et ensuite on forme le vecteur d'anomalie en redressant le vecteur indicateur $\tilde{\tilde{y}}$ par la matrice de covariance $\Sigma$ selon la formule suivante: $z = \Sigma^{-\frac{1}{2}}\left(\tilde{\tilde{y}} - \mu\right)$ ) en utilisant la racine d'une pseudo inverse de $\Sigma$ calculée par décomposition en valeurs singulières $\Sigma = USU^T$ avec $U^T U = I$ et $S = \mathrm{diag}(\sigma_1^2, \ldots \sigma_{n-k}^2, \tilde{0}, \ldots)$. Ainsi, le vecteur d'anomalie standardisé $z$ peut approximativement suivre une distribution gaussienne normale sur le complémentaire du noyau de $\Sigma$ de dimension $k \geq 0$ identifié par les valeurs singulières considérées comme approximativement nulles.

L'étape E4, est un test d'anormalité. En effet, les moyens de traitement 5 sont configurés pour diagnostiquer si le vecteur ou signature d'anomalie révèle une anomalie.

Les signatures normales sont assez plates alors que les anormalités sont représentées par des variations importantes et facilement interprétables.

Ainsi, on peut détecter une anomalie en calculant la norme du vecteur d'anomalie par exemple, selon la distance de Mahalanobis exprimée par la formule suivante:

$$d^2 = \|z\|^2 = \left(\tilde{\tilde{y}} - \mu\right)^T \Sigma^{-1}\left(\tilde{\tilde{y}} - \mu\right),$$

où $\mu$ est la moyenne des vecteurs indicateurs standardisés $\tilde{\tilde{y}}_1, \cdots \tilde{\tilde{y}}_n$ et $\Sigma$ est la matrice de covariance.

Avantageusement, la distribution statistique de la distance de Mahalanobis est connue et peut être approximée par un $\chi^2(n-k)$. Par ailleurs, les niveaux $3\sigma$ ($\sigma$ étant l'écart-type) et $6\sigma$ par rapport à la valeur moyenne peuvent être directement obtenues par un calcul analytique. Par conséquent, il est facile de détecter une anormalité du moteur d'aéronef suivant un seuil de déclenchement défini en fonction de la distribution statistique de la norme du vecteur d'anomalie.

Ainsi, la norme du vecteur d'anomalie peut être considérée comme un score global représentatif d'un comportement anormal facile à détecter.

On notera qu'en cas d'anormalité, il est aussi possible de visualiser le type de défaillance en réalisant une projection deux-dimensionnelles des vecteurs d'anomalies.

A l'issue du test de l'étape E4, on passe bien entendu à l'étape suivante E5 uniquement au cas où le vecteur d'anomalie révèle une anormalité.

L'étape E5 concerne la sélection des signatures de références correspondantes à des défaillances répertoriées du moteur d'aéronef.

Plus particulièrement, les moyens de traitement 5 sont configurés pour sélectionner en cas d'anormalité révélée par le vecteur d'anomalie, un sous-ensemble de vecteurs ou signatures de références ayant des directions appartenant à un voisinage déterminé de la direction du vecteur d'anomalie. Le sous-ensemble de vecteurs de références est sélectionné parmi un ensemble prédéterminé de vecteurs (ou signatures) de références associés à des défaillances du moteur d'aéronef et déterminé selon des critères établis par expertise.

L'ensemble de vecteurs de références peut être construit conformément à des comportements caricaturaux des indicateurs en cas d'anomalie.

En effet, les experts, lors de la conception de l'AMDEC peuvent lister toutes sortes de défaillances possibles en attribuant à chaque défaillance une probabilité d'occurrence a priori et donnent des éléments suffisants pour définir le comportement caricatural des indicateurs en cas d'anomalies. Le comportement caricatural est en général décrit de manière informelle de la forme : « cette valeur est très élevée », « cette autre valeur croît très lentement », « cela peut être faible lorsque la dernière valeur est élevée », et ainsi de suite.

Ces comportements caricaturaux peuvent être traduits de manière connue sous la forme de scores et conduisent à construire une liste de défaillances connues. De plus, sous une hypothèse de contexte standard, cette liste permet de construire des exemples de défaillances classifiées. Ces exemples peuvent être mis sous forme de vecteurs qu'on normalise pour construire une matrice standardisée comportant sur chaque ligne un vecteur de référence standardisé. De la sorte, l'AMDEC permet de définir des vecteurs de références décrivant de manière caricaturale les défaillances répertoriées dans un référentiel réel compréhensible par les experts du moteur. De plus, l'AMDEC permet de définir une probabilité d'occurrence a priori associée à chaque vecteur de référence.

On notera qu'étant donné que les définitions de défaillances sont caricaturales, on ne peut tenir compte que de la direction des vecteurs de références. Ainsi, la classification ou la sélection du sous-ensemble de vecteurs de références peut être réalisée en comparant le vecteur d'anomalie aux vecteurs de références sur une (n-k-1)-sphère dans un espace vectoriel de dimension n-k égale au nombre d'indicateurs de l'ensemble d'indicateurs standardisés $\widetilde{\widetilde{y}}_1, \cdots \widetilde{\widetilde{y}}_n$ moins le nombre de relations linéaire k entre ces indicateurs.

Ceci peut être réalisé en calculant des distances géodésiques entre la projection du vecteur d'anomalie et les projections des vecteurs de références sur la sphère. En effet, le calcul des distances entre des vecteurs perd tout sens dans un espace de dimension supérieur à cinq.

Plus particulièrement, on calcule les distances géodésiques entre la direction du vecteur d'anomalie et les directions des vecteurs de références sur la sphère. Ainsi, la direction du vecteur d'anomalie peut être comparée aux directions des vecteurs de référence par un calcul de distance géodésique sur une sphère de rayon 1.

La distance géodésique $\theta_t^2$ entre le vecteur d'anomalie $z$ et un vecteur de référence standardisé $t$ (standard template, en anglais) peut être approximée suivant un produit scalaire normalisé selon la formule suivante :

$$\theta_t^{\,2} \approx 2\left(1 - \frac{t^T.z}{\|t\|\|z\|}\right)$$

Bien entendu, on ne peut pas utiliser la notion de distance en tant que paramètre de distribution dans un espace de dimension élevée.

Cependant, on peut comparer ces distances géodésiques deux-à-deux ce qui permet de classer les vecteurs de références par exemple, selon un ordre croissant de leurs distances géodésiques par rapport au vecteur d'anomalie. Alors, on peut former le sous-ensemble de vecteurs de références à partir des premiers vecteurs de références ayant un ordre de classement inférieur à un rang déterminé. Par exemple, on peut choisir les premiers 3, 4 ou 5 vecteurs de références pour former un sous-ensemble de quelques vecteurs de références représentatifs des défaillances les plus probables.

A l'étape E6, les moyens de traitement 5 sont configurés pour identifier les défaillances associées au sous-ensemble de vecteurs de références sélectionné précédemment.

Plus particulièrement, les distances géodésiques servent à identifier les défaillances les plus probables. En effet, comme il est toujours possible de sélectionner les principaux vecteurs de références les plus proches du vecteur d'anomalie, on peut limiter le modèle de probabilité sur la sous-sphère correspondante de plus petite dimension et utiliser les distances géodésiques pour calculer une probabilité d'occurrence locale a posteriori. On utilise pour cela un modèle de mélange de gaussiennes sur la sphère. Le rayon des gaussiennes dépend des a priori des experts.

Ainsi, on peut calculer pour chaque vecteur de référence, une probabilité d'occurrence a posteriori $P(f)$ de défaillance $f$ en fonction d'une probabilité d'occurrence a priori pour chaque défaillance $f$ définie par expertise lors de la conception de l'AMDEC et les distances géodésiques utilisées pour le classement du sous-ensemble de vecteurs de références.

La probabilité d'occurrence a posteriori $P(f)$ peut être calculée selon un modèle de probabilité paramétré par un coefficient de pondération $\lambda_t$ défini par expertise pour chaque vecteur de référence $t$, selon la formule suivante :

$$\sum_t \lambda_t \exp(-\theta_t^2 / 2\sigma_t^2),$$

où $\theta_t$ est la distance géodésique entre le vecteur d'anomalie $z$ et le vecteur de référence $t$ ; et $\sigma_t^2$ est calculé selon la probabilité d'occurrence a priori associée au vecteur de référence $t$.

Ainsi, la norme $d^2$ du vecteur d'anomalie indique le niveau d'anormalité et la distance géodésique $\theta_t^2$ permet d'identifier les défaillances les plus probables. Ceci est réalisé en s'appuyant sur un recueil des connaissances auprès des experts, et non pas sur une base de données de défaillances.

La figure 3 illustre les étapes principales implémentées par les moyens de traitement 5 pour détecter les composants fautifs dans le moteur 1 d'aéronef.

En effet, après avoir identifié les défaillances en calculant pour chacune une probabilité d'occurrence, on peut utiliser cette dernière pour détecter les composants fautifs. Pour cela on exploite une grille de décision définie par expertise et donnant pour chacun des composants physiques analysés une probabilité de faute quand une défaillance précise est observée.

Ainsi, à l'étape E7, les moyens de traitement 5 sont configurés pour établir une grille de décision suivant des critères établis par expertise. La grille de décision peut être formée d'une matrice $Q = (q_{f,c})$ de probabilités conditionnelles $q_{f,c} = P(c/f)$ qu'un composant $c$ soit fautif, sachant qu'une défaillance $f$ est observée et d'une série de coefficients correspondants à des probabilités a priori des défaillances de chaque composant *c*. La matrice *Q* = ($q_{f,c}$) est une matrice positive symétrique.

Par ailleurs, on notera que la grille de décision peut être corroborée en lançant un apprentissage automatique. Le rôle principal de cet apprentissage se limite uniquement à vérifier les expertises évitant ainsi la construction d'une base de données.

A l'étape E8, les moyens de traitement 5 sont configurés pour déduire selon des règles bayésiennes des probabilités *P(c)* de défaillances par composant *c* à partir des probabilités d'occurrences a posteriori *P(f)* et de la grille de décision *Q* = ($q_{f,c}$).

Ainsi, pour chaque composant *c*, on peut estimer une probabilité de défaillance *P(c)* donnée par la formule suivante :

$$P(c) = \left| \beta_c \sum_f (2q_{f,c} - 1)P(f) \right|_0^1$$

où $\beta_c$ est un coefficient de normalisation qui correspond à une occurrence a priori du composant fautif. Par ailleurs, le résultat de la formule est tronqué entre 0 et 1.

Finalement, à l'étape E9, les moyens de traitement 5 sont configurés pour détecter des composants physiques fautifs qui sont responsables des défaillances selon les probabilités de défaillances par composant calculées à l'étape précédente.

On notera que lorsqu'une anomalie est détectée, le calcul à l'étape E6 des probabilités d'occurrences a posteriori *P(f)* de défaillances permet de facilement schématiser la probabilité de chaque défaillance sur une table ou une image. En outre, la détection des composants fautifs de l'étape E9 permet de construire une autre image où chaque défaillance est remplacée par un nom réel du composant. Ces images peuvent alors être facilement consultées par les experts.

Ainsi, la présente invention permet d'abord de diagnostiquer une anomalie pour ensuite classifier les défaillances associées à cette anomalie en utilisant une méthode ouverte interprétable par les experts moteurs.

De plus, le découplage de la détection d'anormalité et de la classification des défaillances permet de détecter de nouveaux types de défaillances non répertoriées par les experts, de les analyser et de les entrer à leur tour dans la liste des défaillances possibles.

Par ailleurs, selon une implémentation préférée, les différentes étapes du procédé selon l'invention sont exécutées au moyen d'instructions de code de programme.

En conséquence, l'invention vise aussi un produit programme d'ordinateur, ce programme étant susceptible d'être mis en oeuvre dans les moyens de traitement ou un système informatique, ce programme comportant des instructions de code adaptées à la mise en oeuvre d'un procédé selon l'invention tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou un autre moyen d'enregistrement.

D'autre part, le support d'informations peut être un support transmissible tel qu'un signal électrique ou optique, qui peut être acheminé via un câble électrique ou optique, par radio ou par d'autres moyens.

Alternativement, le support d'informations peut être un circuit intégré dans lequel le programme est incorporé, le circuit étant adapté pour exécuter ou pour être utilisé dans l'exécution du procédé en question.

## Revendications

1. Procédé pour identifier des défaillances dans un moteur (1) d'aéronef, comportant les étapes suivantes :

   - recueillir par des capteurs (3a-3f) des mesures temporelles sur ledit moteur (1) d'aéronef et son environnement,
   - calculer par des moyens de traitement (5) à partir desdites mesures temporelles des indicateurs spécifiques à des éléments dudit moteur (1) d'aéronef,
   - définir par les moyens de traitement (5) à partir desdits indicateurs spécifiques un ensemble d'indicateurs standardisés représentatifs du fonctionnement dudit moteur (1) d'aéronef,
   - construire par les moyens de traitement (5) un vecteur d'anomalie représentatif d'un comportement dudit moteur (1) en fonction dudit ensemble d'indicateurs standardisés,
   - sélectionner par les moyens de traitement (5) en cas d'anormalité révélée par ledit vecteur d'anomalie, un sous-ensemble de vecteurs de références ayant des directions appartenant à un voisinage déterminé de la direction dudit vecteur d'anomalie, ledit sous-ensemble de vecteurs de références étant sélectionné parmi un ensemble de vecteurs de références associés à des défaillances dudit moteur (1) d'aéronef et déterminé selon des critères établis par expertise, ledit ensemble de vecteurs de références étant construit conformément à des comportements caricaturaux des indicateurs en cas d'anomalie déterminés par des experts ; et

- identifier par les moyens de traitement (5) les défaillances associées audit sous-ensemble de vecteurs de références,

et la sélection dudit sous-ensemble de vecteurs de références comportant les étapes suivantes :

- calculer par les moyens de traitement (5) des distances géodésiques entre la projection dudit vecteur d'anomalie et les projections desdits vecteurs de références sur une sphère dans un espace de dimension égale au nombre d'indicateurs dudit ensemble d'indicateurs standardisés moins le nombre de relations linéaires entre ces indicateurs,
- comparer par les moyens de traitement (5) lesdites distances géodésiques deux-à-deux,
- classer par les moyens de traitement (5) les vecteurs de références selon un ordre croissant de leurs distances géodésiques par rapport audit vecteur d'anomalie, et
- former par les moyens de traitement (5) ledit sous-ensemble de vecteurs de références à partir des premiers vecteurs de références ayant un ordre de classement inférieur à un rang déterminé.

2. Procédé selon la revendication 1, dans lequel ladite sphère est de rayon 1.

3. Procédé selon la revendication 1 ou la revendication 2, comportant les étapes suivantes :

- définir par les moyens de traitement (5) pour chaque vecteur de référence, une probabilité d'occurrence a priori suivant des critères établis par expertise,
- calculer par les moyens de traitement (5) pour chaque vecteur de référence, une probabilité d'occurrence a posteriori en fonction de ladite probabilité d'occurrence a priori et desdites distances géodésiques.

4. Procédé selon l'une quelconque des revendications 1 à 3, dans lequel ledit ensemble d'indicateurs standardisés $\tilde{\tilde{y}}_1, \cdots \tilde{\tilde{y}}_m$ comporte des indicateurs $\tilde{y}_1, \cdots \tilde{y}_n$ identifiés par les moyens de traitement (5) suivant des critères établis par expertise.

5. Procédé selon la revendication 4, dans lequel ledit ensemble d'indicateurs standardisés $\tilde{\tilde{y}}_1, \cdots \tilde{\tilde{y}}_m$ comporte en outre des indicateurs dynamiques construits par les moyens de traitement (5) en fonction des indicateurs à des instants présents et passés $\tilde{\tilde{y}}(t) = f(\tilde{y}(s); s \le t)$ représentatifs des comportements temporels dudit moteur d'aéronef.

6. Procédé selon l'une quelconque des revendications 1 à 5, dans lequel la construction dudit vecteur d'anomalie comporte :

- former par les moyens de traitement (5) un vecteur indicateur $\tilde{\tilde{y}}$ à partir dudit ensemble d'indicateurs,
- construire par les moyens de traitement (5) ledit vecteur d'anomalie z en renormalisant ledit vecteur indicateur $\tilde{\tilde{y}}$ selon la formule suivante :

$$z = \Sigma^{-\frac{1}{2}}\left(\tilde{\tilde{y}} - \mu\right),$$

où $\mu$ est la moyenne des vecteurs indicateurs et $\Sigma^{-\frac{1}{2}}$ est la racine d'une pseudo-inverse $\Sigma^{-1}$ d'une matrice de covariance $\Sigma$.

7. Procédé selon la revendication 6, comportant les étapes suivantes :

- calculer par les moyens de traitement (5) une norme dudit vecteur d'anomalie selon une distance de Mahalanobis :

$$d^2 = \|z\|^2 = \left(\tilde{\tilde{y}} - \mu\right)^T \Sigma^{-1}\left(\tilde{\tilde{y}} - \mu\right),$$

- détecter par les moyens de traitement (5) une anormalité dudit moteur d'aéronef suivant un seuil de déclenchement défini en fonction de la distribution statistique de ladite norme du vecteur d'anomalie.

8. Procédé selon la revendication 3, comportant en outre :

- établir par les moyens de traitement (5) une grille de décision suivant des critères établis par expertise,
- déduire par les moyens de traitement (5) selon des règles bayésiennes des probabilités de défaillances par composant à partir desdites probabilités d'occurrences a posteriori et de ladite grille de décision, et
- détecter par les moyens de traitement (5) des composants physiques fautifs qui sont responsables desdites défaillances selon lesdites probabilités de défaillances par composant.

**9.** Procédé selon la revendication 8, dans lequel ladite grille de décision est formée d'une matrice de probabilités conditionnelles qu'un composant soit fautif, sachant qu'une défaillance est observée et d'une série de coefficients correspondants à des probabilités a priori des défaillances de chaque composant.

**10.** Procédé selon la revendication 8 ou la revendication 9, dans lequel ladite grille de décision est corroborée par un apprentissage automatique.

**11.** Système d'identification de défaillances dans un moteur (1) d'aéronef, comportant :

- des capteurs (3a-3f) pour recueillir des mesures temporelles sur ledit moteur (1) d'aéronef et son environnement,
- des moyens (5) pour calculer à partir desdites mesures temporelles des indicateurs spécifiques à des éléments dudit moteur (1) d'aéronef,-des moyens (5) pour définir à partir desdits indicateurs spécifiques un ensemble d'indicateurs standardisés représentatifs du fonctionnement dudit moteur (1) d'aéronef,
- des moyens (5) pour construire un vecteur d'anomalie représentatif d'un comportement dudit moteur (1) en fonction dudit ensemble d'indicateurs standardisés,
- des moyens (5) pour sélectionner en cas d'anormalité révélée par ledit vecteur d'anomalie, un sous-ensemble de vecteurs de références ayant des directions appartenant à un voisinage déterminé de la direction dudit vecteur d'anomalie, ledit sous-ensemble de vecteurs de références étant sélectionné parmi un ensemble de vecteurs de références associés à des défaillances dudit moteur d'aéronef et déterminé selon des critères établis par expertise, ledit ensemble de vecteurs de références étant construit conformément à des comportements caricaturaux des indicateurs en cas d'anomalie déterminés par des experts , et
- des moyens (5) pour identifier les défaillances associées audit sous-ensemble de vecteurs de références

et les moyens pour sélectionner le sous-ensemble de vecteurs de références comportant :

- des moyens (5) pour calculer des distances géodésiques entre la projection dudit vecteur d'anomalie et les projections desdits vecteurs de références sur une sphère dans un espace de dimension égale au nombre d'indicateurs dudit ensemble d'indicateurs standardisés moins le nombre de relations linéaires entre ces indicateurs,
- des moyens (5) pour comparer lesdites distances géodésiques deux-à-deux,
- des moyens (5) pour classer les vecteurs de références selon un ordre croissant de leurs distances géodésiques par rapport audit vecteur d'anomalie, et
- des moyens (5) pour former ledit sous-ensemble de vecteurs de références à partir des premiers vecteurs de références ayant un ordre de classement inférieur à un rang déterminé.

**12.** Système selon la revendication 11, comportant :

- des moyens (5) pour définir pour chaque vecteur de référence, une probabilité d'occurrence a priori suivant des critères établis par expertise,
- des moyens (5) pour calculer pour chaque vecteur de référence, une probabilité d'occurrence a posteriori en fonction de ladite probabilité d'occurrence a priori et desdites distances géodésiques.

**13.** Système selon la revendication 11, comportant en outre :

- des moyens (5) pour établir une grille de décision suivant des critères établis par expertise,
- des moyens (5) pour déduire selon des règles bayésiennes des probabilités de défaillances par composant à partir desdites probabilités d'occurrences a posteriori et de ladite grille de décision, et
- des moyens (5) pour détecter des composants physiques fautifs qui sont responsables desdites défaillances selon lesdites probabilités de défaillances par composant.

**14.** Programme d'ordinateur comportant des instructions pour la mise en oeuvre du procédé d'identification de défaillances selon les revendications 1 à 10 lorsqu'il est exécuté par des moyens de traitement.

**Patentansprüche**

**1.** Verfahren zum Identifizieren von Ausfällen in einem Flugzeugtriebwerk (1), umfassend die folgenden Schritte:

- Erfassen von Zeitmessungen an dem Flugzeugtriebwerk (1) und seiner Umgebung durch Sensoren (3a-f),
- Berechnen von Indikatoren, die spezifisch für Komponenten des Flugzeugtriebwerks (1) sind, aus den Zeitmessungen durch Verarbeitungsmittel (5),
- Definieren eines Satzes standardisierter Indikatoren, die für den Betrieb des Flugzeugtriebwerks (1) repräsentativ sind, aus den spezifischen Indikatoren durch die Verarbeitungsmittel (5),

- Konstruieren eines Anomalievektors durch die Verarbeitungsmittel (5), der ein Verhalten des Triebwerks (1) in Abhängigkeit von dem Satz standardisierter Indikatoren darstellt,

- Auswählen einer Teilmenge von Referenzvektoren mit Richtungen, die zu einer bestimmten Nachbarschaft der Richtung des Anomalievektors gehören, durch die Verarbeitungsmittel (5) im Falle einer durch den Anomalievektor aufgedeckten Anomalie, wobei die Teilmenge von Referenzvektoren ausgewählt ist aus einer Menge von Referenzvektoren, die Ausfällen des Flugzeugtriebwerks (1) zugeordnet und nach fachlich festgelegten Kriterien bestimmt sind, wobei die Menge von Referenzvektoren entsprechend einem durch Sachverständige bestimmten karikierten Verhalten der Indikatoren im Falle einer Anomalie gebildet wird; und

- Identifizieren der Ausfälle, die der Teilmenge der Referenzvektoren zugeordnet sind, durch die Verarbeitungsmittel (5),

und Auswählen der Teilmenge von Referenzvektoren, umfassend die folgenden Schritte:

- Berechnen von geodätischen Abständen zwischen der Projektion des Anomalievektors und den Projektionen der Referenzvektoren auf eine Kugel in einem Raum mit einer Abmessung, die der Anzahl der Indikatoren des Satzes standardisierter Indikatoren abzüglich der Anzahl der linearen Beziehungen zwischen diesen Indikatoren entspricht, durch die Verarbeitungsmittel (5),

- paarweises Vergleichen der geodätischen Abstände durch die Verarbeitungsmittel (5),

- Klassifizieren der Referenzvektoren durch die Verarbeitungsmittel (5) gemäß einer aufsteigenden Reihenfolge ihrer geodätischen Abstände in Bezug auf den Anomalievektor, und

- Bilden der Teilmenge von Referenzvektoren aus den ersten Referenzvektoren mit einer Rangfolge, die niedriger als ein gegebener Rang ist, durch die Verarbeitungsmittel (5).

2. Verfahren nach Anspruch 1, wobei die Kugel einen Radius von 1 hat.

3. Verfahren nach Anspruch 1 oder Anspruch 2, umfassend die folgenden Schritte:

- Definieren einer Wahrscheinlichkeit des Auftretens a priori durch die Verarbeitungsmittel (5) für jeden Referenzvektor nach fachlich festgelegten Kriterien,

- Berechnen einer Wahrscheinlichkeit des Auftretens a posteriori in Abhängigkeit von der Wahrscheinlichkeit des Auftretens a priori und den geodätischen Abständen durch die Verarbeitungsmittel (5) für jeden Referenzvektor.

4. Verfahren nach einem der Ansprüche 1 bis 3, wobei der Satz standardisierter Indikatoren $\widetilde{\widetilde{y}}_1, \cdots \widetilde{\widetilde{y}}_m$ Indikatoren $\tilde{y}_1, \cdots \tilde{y}_n$ umfasst, die durch die Verarbeitungsmittel (5) nach fachlich festgelegten Kriterien identifiziert werden.

5. Verfahren nach Anspruch 4, wobei der Satz standardisierter Indikatoren $\widetilde{\widetilde{y}}_1, \cdots \widetilde{\widetilde{y}}_m$ ferner dynamische Indikatoren umfasst, die durch die Verarbeitungsmittel (5) in Abhängigkeit von Indikatoren zu aktuellen und vergangenen Zeiten $\widetilde{\widetilde{y}}(t) = f(\tilde{y}(s); s \leq t)$ konstruiert sind, die für das Zeitverhalten des Flugzeugtriebwerks repräsentativ sind.

6. Verfahren nach einem der Ansprüche 1 bis 5, wobei die Konstruktion des Anomalievektors umfasst:

- Bilden eines Indikatorvektors $\widetilde{\widetilde{y}}$ aus dem Satz von Indikatoren durch die Verarbeitungsmittel (5),

- Konstruieren des Anomalievektors *z* durch die Verarbeitungsmittel (5), indem der Indikatorvektor $\widetilde{\widetilde{y}}$ gemäß der folgenden Formel renormiert wird:

$$z = \Sigma^{-\frac{1}{2}} \left( \widetilde{\widetilde{y}} - \mu \right),$$

wobei $\mu$ der Mittelwert der Indikatorvektoren und $\Sigma^{-\frac{1}{2}}$ die Wurzel eines Pseudogegenteils $\Sigma^{-1}$ einer Kovarianzmatrix $\Sigma$ ist.

7. Verfahren nach Anspruch 6, umfassend die folgenden Schritte:

- Berechnen einer Norm des Anomalievektors gemäß einem Mahalanobis-Abstand durch das Verarbeitungsmittel (5):

$$d^2 = \|z\|^2 = \left( \widetilde{\widetilde{y}} - \mu \right)^T \Sigma^{-1} \left( \widetilde{\widetilde{y}} - \mu \right),$$

- Erfassen einer Anomalie des Flugzeugtriebwerks durch die Verarbeitungsmittel (5) entsprechend einem Auslöseschwellenwert, der in Abhängigkeit von der statistischen Verteilung der Norm des Anomalievektors definiert ist.

8.  Verfahren nach Anspruch 3, ferner umfassend:

    - Erstellen eines Entscheidungsrasters mittels der Verarbeitungsmittel (5) nach fachlich festgelegten Kriterien,
    - Ableiten von Ausfallwahrscheinlichkeiten pro Komponente aus den Wahrscheinlichkeiten des Auftretens a posteriori und dem Entscheidungsraster durch die Verarbeitungsmittel (5) gemäß den Bayes'schen Regeln, und
    - Erfassen von fehlerhaften physikalischen Komponenten, die für die Ausfälle gemäß den Ausfallwahrscheinlichkeiten pro Komponente verantwortlich sind, durch die Verarbeitungsmittel (5).

9.  Verfahren nach Anspruch 8, wobei das Entscheidungsraster durch eine Matrix von bedingten Wahrscheinlichkeiten, dass eine Komponente fehlerhaft ist, wissend, dass ein Ausfall beobachtet wird, und durch eine Reihe von Koeffizienten, die den a priori Wahrscheinlichkeiten von Ausfällen jeder Komponente entsprechen, gebildet wird.

10. Verfahren nach Anspruch 8 oder Anspruch 9, wobei das Entscheidungsraster durch automatisches Lernen untermauert wird.

11. System zum Identifizieren von Ausfällen in einem Flugzeugtriebwerk (1), umfassend:

    - Sensoren (3a-3f) zum Erfassen von Zeitmessungen an dem Flugzeugtriebwerk (1) und seiner Umgebung,
    - Mittel (5) zum Berechnen von Indikatoren, die spezifisch für Komponenten des Flugzeugtriebwerks (1) sind, aus den Zeitmessungen,
    - Mittel (5) zum Definieren eines Satzes standardisierter Indikatoren, die für den Betrieb des Flugzeugtriebwerks (1) repräsentativ sind, aus den spezifischen Indikatoren,
    - Mittel (5) zum Konstruieren eines Anomalievektors, der ein Verhalten des Motors (1) in Abhängigkeit von dem Satz standardisierter Indikatoren darstellt,
    - Mittel (5) zum Auswählen einer Teilmenge von Referenzvektoren mit Richtungen, die zu einer bestimmten Nachbarschaft der Richtung des Anomalievektors gehören, im Falle einer durch den Anomalievektor aufgedeckten Anomalie, wobei die Teilmenge von Referenzvektoren ausgewählt ist aus einer Menge von Referenzvektoren, die Ausfällen des Flugzeugtriebwerks zugeordnet und nach fachlich festgelegten Kriterien bestimmt sind, wobei die Menge von Referenzvektoren entsprechend einem durch Sachverständige bestimmten karikierten Verhalten der Indikatoren im Falle einer Anomalie gebildet wird; und
    - Mittel (5) zum Identifizieren von Ausfällen, die der Teilmenge von Referenzvektoren zugeordnet sind

und wobei die Mittel zum Auswählen der Teilmenge von Referenzvektoren umfassen:

    - Mittel (5) zum Berechnen von geodätischen Abständen zwischen der Projektion des Anomalievektors und den Projektionen der Referenzvektoren auf eine Kugel in einem Raum mit einer Abmessung, die der Anzahl der Indikatoren des Satzes standardisierter Indikatoren abzüglich der Anzahl der linearen Beziehungen zwischen diesen Indikatoren entspricht,
    - Mittel (5) zum paarweisen Vergleichen der geodätischen Abstände,
    - Mittel (5) zum Klassifizieren der Referenzvektoren gemäß einer aufsteigenden Reihenfolge ihrer geodätischen Abstände in Bezug auf den Anomalievektor, und
    - Mittel (5) zum Bilden der Teilmenge von Referenzvektoren aus den ersten Referenzvektoren mit einer Rangfolge, die niedriger als ein gegebener Rang ist.

12. System nach Anspruch 11, umfassend:

    - Mittel (5) zum Definieren einer Wahrscheinlichkeit des Auftretens a priori für jeden Referenzvektor nach fachlich festgelegten Kriterien,
    - Mittel (5) zum Berechnen einer Wahrscheinlichkeit des Auftretens a posteriori in Abhängigkeit von der Wahrscheinlichkeit des Auftretens a priori und den geodätischen Abständen für jeden Referenzvektor.

13. System nach Anspruch 11, ferner umfassend:

    - Mittel (5) zum Erstellen eines Entscheidungsrasters nach fachlich festgelegten Kriterien,
    - Mittel (5) zum Ableiten von Ausfallwahrscheinlichkeiten pro Komponente aus den Wahrscheinlichkeiten des Auftretens a posteriori und dem Entscheidungsraster gemäß den Bayes'schen Regeln, und
    - Mittel (5) zum Erfassen von fehlerhaften physikalischen Komponenten, die für die Ausfälle gemäß den Ausfallswahrscheinlichkeiten pro Komponente verantwortlich sind.

14. Computerprogramm, umfassend Anweisungen zum Implementieren des Verfahrens zum Identifizieren von Ausfällen nach den Ansprüchen 1 bis 10, wenn es durch Verarbeitungsmittel ausgeführt wird.

**Claims**

1. A method of identifying failures in an aeroengine (1), the method comprising the following steps:

   • using sensors (3a-3f) to collect time-series measurements from said aeroengine (1) and its environment;
   • using the processor means (5) to calculate from said time-series measurements indicators that are specific to elements of said aeroengine (1);
   • using the processor means (5) to define from said specific indicators a set of standardized indicators that are representative of the operation of said aeroengine (1);
   • using the processor means (5) to construct an anomaly vector representative of a behavior of said engine (1) as a function of said set of standardized indicators;
   • using the processor means (5), in the event of an abnormality being revealed by said anomaly vector, to select a subset of reference vectors having directions belonging to a determined neighborhood of the direction of said anomaly vector, said subset of reference vectors being selected from a set of reference vectors associated with failures of said aeroengine (1) and determined using criteria established by experts, that said set of reference vectors being constructed in accordance with caricatural behaviors of the indicators in the event of anomalies determined by experts ; and
   • using the processor means (5) to identify the failures associated with said subset of reference vectors;

   wherein selecting said subset of reference vectors comprises the following steps :

   • using the processor means (5) to calculate geodesic distances between the projection of said anomaly vector and the projections of said reference vectors on a sphere in a space of dimension equal to the number of indicators in said set of standardized indicators minus the number of linear relationships between the indicators;
   • using the processor means (5) to compare said geodesic distances in pairs;
   • using the processor means (5) to classify the reference vectors in increasing order of their geodesic distances relative to said anomaly vector; and
   • using the processor means (5) to form said subset of reference vectors from first reference vectors having a classification order less than a determined rank.

2. A method according to claim 1, wherein said sphere is of radius 1.

3. A method according to claim 1 or claim 2, comprising the following steps :

   • using the processor means (5) to define, for each reference vector, an a priori probability of occurrence on the basis of criteria established by experts; and
   • using the processor means (5) to calculate, for each reference vector, an a posteriori probability of occurrence as a function of said a priori probability of occurrence and of said geodesic distances.

4. A method according to any one of claims 1 to 3, wherein said set of standardized indicators $\widetilde{\widetilde{y}}_1, \cdots \widetilde{\widetilde{y}}_m$ comprises indicators $\tilde{y}_1, \cdots \tilde{y}_n$ identified by the processor means (5) using criteria established by experts.

5. A method according to claim 4, wherein said set of standardized indicators $\widetilde{\widetilde{y}}_1, \cdots \widetilde{\widetilde{y}}_m$ further comprises dynamic indicators constructed by the processor means (5) as a function of the indicators at present and past instants $\widetilde{\widetilde{y}}(t) = f\big(\tilde{y}(s); s \le t\big)$ and representative of the behavior of said aeroengine over time.

6. A method according to any one of claims 1 to 5, wherein constructing said anomaly vector comprises:

   • using the processor means (5) to form an indicator vector $\widetilde{\widetilde{y}}$ from said set of indicators; and
   • using the processor means (5) to construct said anomaly vector z by renormalizing said indicator vector $\widetilde{\widetilde{y}}$ using the following formula:

   $$z = \Sigma^{-\frac{1}{2}}\big(\widetilde{\widetilde{y}} - \mu\big)$$

   where $\mu$ is the mean of the indicator vectors and $\Sigma^{-1/2}$ is the root of a pseudo-inverse signal $\Sigma^{-1}$ of a covariance matrix $\Sigma$.

**7.** A method according to claim 6, comprising the following steps:

· using the processor means (5) to calculate the norm of said anomaly vector using a Mahalanobis distance:

$$d^2 = \|z\|^2 = \left(\widetilde{\widetilde{y}} - \mu\right)^T \Sigma^{-1} \left(\widetilde{\widetilde{y}} - \mu\right);$$

and

· using the processor means (5) to detect an abnormality of said aeroengine using a trigger threshold defined as a function of the statistical distribution of said norm of the anomaly vector.

**8.** A method according to claim 3, further comprising :

· using the processor means (5) to establish a decision grid in application of criteria established by experts;
· using the processor means (5) to apply Bayesian rules to deduce per component probabilities of failures from said a posteriori probabilities of occurrence and from said decision grid; and
· using the processor means (5) to detect faulty physical components that are responsible for said failures in application of said per component failure probabilities.

**9.** A method according to claim 8, wherein said decision grid is formed of a matrix of conditional probabilities that a component is faulty, knowing that a failure has been observed and of a series of coefficients corresponding to a priori probabilities of failure of each component.

**10.** A method according to claim 8 or claim 9, wherein said decision grid is corroborated by machine learning.

**11.** A system for identifying failures in an aeroengine (1), comprising :

· sensors (3a-3f) for collecting time-series measurements from said aeroengine (1) and its environment;
· means (5) for calculating from said time-series measurements indicators that are specific to elements of said aeroengine (1);
· means (5) for using said specific indicators to define a set of standardized indicators representative of the operation of said aeroengine (1);
· means (5) for constructing an anomaly vector representative of a behavior of said engine (1) as a function of said set of standardized indicators;

· means (5) for selecting in the event of an anomaly being revealed by said anomaly vector a subset of reference vectors having directions belonging to a determined neighborhood of the direction of said anomaly vector, said subset of reference vectors being selected from a set of reference vectors associated with failures of said aeroengine and determined using criteria established by experts, that said set of reference vectors being constructed in accordance with caricatural behaviors of the indicators in the event of anomalies determined by experts ;
· means (5) for identifying the failures associated with said subset of reference vectors;

and wherein the means for selecting a subset of reference vectors comprise:

· means (5) for calculating geodesic distances between the projection of said anomaly vector and the projections of said reference vectors on a sphere in a space of dimension equal to the number of indicators of said set of standardized indicators minus the number of linear relationships between said indicators;
· means (5) for comparing said geodesic distances in pairs;
· means (5) for classifying the reference vectors in an increasing order of their geodesic distances relative to said anomaly vector; and
· means (5) for forming said subset of reference vectors from first reference vectors having a classification order less than a determined rank.

**12.** A system according to claim 11, comprising :

· means (5) for defining, for each reference vector, an a priori probability of occurrence in application of criteria established by experts; and
· means (5) for calculating, for each reference vector, an a posteriori probability of occurrence as a function of said a priori probability of occurrence and of said geodesic distances.

**13.** A system according to claim 12, further comprising :

· means (5) for establishing a decision grid in application of criteria established by experts;
· means (5) for using Bayesian rules to deduce per component failure probabilities from said a posteriori probabilities of occurrence and from said decision grid; and
· means (5) for detecting faulty physical components that are responsible for said failures according to said per component failure probabilities.

**14.** A computer program including instructions for implementing the method of identifying failures according to claims 1 to 10, when executed by processor means.

FIG.1

| RECUEILLIR DES MESURES TEMPORELLES | E1 |

| DEFINIR DES INDICATEURS STANDARDISES | E2 |

| CONSTRUIRE UN VECTEUR D'ANOMALIE | E3 |

| DETECTER UNE ANORMALITE | E4 |

| SELECTIONNER DES VECTEURS DE REFERENCES ASSOCIES A DES DEFAILLANCE | E5 |

| IDENTIFIER LES DEFAILLANCES | E6 |

## FIG.2

| ETABLIR UNE GRILLE DE DECISION | E7 |

| DEDUIRE DES PROBABILITES DE DEFAILLANCES PAR COMPOSANT | E8 |

| DETECTER LES COMPOSANTS FAUTIFS | E9 |

## FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **K.P. DETROJA et al.** A possibilistic clustering approach to novel fault detection and isolation. *Journal of Process Control,* 2006, vol. 16